# EUROPÄISCHE PATENTANMELDUNG

(11) **EP 1 306 789 A2**
(43) Veröffentlichungstag der Anmeldung: **02.05.2003**
(21) Anmeldenummer: 02360254.3
(22) Anmeldetag: 30.08.2002
(51) Int. Cl.: G06F 17/60, G07F 19/00

(54) **Blockierungs-Server**

(30) Priorität: 06.09.2001 DE 10143876
(71) Anmelder: ALCATEL, 75008 Paris (FR)
(72) Erfinder: Klumpp, Dieter, Dr., 70193 Stuttgart (DE); Pfitzmann, Andreas, Dr., 01277 Dresden (DE)
(74) Vertreter: Urlichs, Stefan, Dipl.-Phys.

(57) **Zusammenfassung**

Die Erfindung betrifft ein Verfahren zur Unterstützung der Sperrung von Kredit- oder Bank-Karten eines Kartennutzers sowie einen Blockierungs-Server, eine Vorrichtung, und einen Bank-Server zur Durchführung des Verfahrens. Ein kartenindividueller Blockierungscode wird auf einem Speichermedium abgespeichert. Auf einen Steuerbefehl des Kartennutzers wird der Blockierungscode (BC1) aus dem Speichermedium ausgelesen und ein kartenindividueller Blockierungscode (BC1) über ein Kommunikationsnetz (KN) an einen zentralen Blockierungs-Server (BS) gesendet wird. Der empfangene Blockierungscode (BC1) wird von dem zentralen Blockierungs-Server (BS) verifiziert. Bei positiver Verifikation wird von dem Blockierungs-Server (BS) die Sperrung der dem Blockierungscode (BC1) zugeordneten Kredit- oder Bank-Karte veranlaßt.

## Beschreibung

Die Erfindung betrifft ein Verfahren zur Unterstützung der Sperrung von Kredit- oder Bank-Karten eines Kartennutzers sowie einen Blockierungs-Server, eine Vorrichtung, und einen Bank-Server zur Durchführung des Verfahrens.

Die Erfindung geht von der heute üblichen Art und Weise der Sperrung von Kredit- oder Bank-Karten aus.

Will ein Kartennutzer eine Kredit- oder Bank-Karte sperren lassen, weil ihm diese beispielsweise entwendet worden ist, so hat er eine spezielle Service Rufnummer der jeweiligen Bank oder des jeweiligen Kreditinstitutes zu wählen. Anschließend identifiziert er die zu sperrende Kredit- oder Bank-Karte gegenüber dem Service-Personal der Bank oder des Kreditinstitutes. Das Service-Personal veranlaßt sodann das Sperren der Kredit- oder Bank-Karte, indem es einen entsprechenden Steuerbefehl in das Computersystem der jeweiligen Bank oder des jeweiligen Kreditinstitutes eingibt.

Dieses heute übliche Verfahren hat den Nachteil, daß es mit hohen Kosten verbunden ist.

Der Erfindung liegt nun die Aufgabe zugrunde, eine kostengünstige und effiziente Sperrung von Kredit- oder Bank-Karte zu ermöglichen.

Diese Aufgabe wird gelöst durch ein Verfahren zur Unterstützung der Sperrung von Kredit- oder Bank-Karten eines Kartennutzers nach der Lehre von Anspruch 1, durch einen Blockierungs-Server zur Unterstützung der Sperrung von Kredit- oder Bank-Karten einer Vielzahl von Kartennutzern nach der Lehre von Anspruch 5, durch eine Vorrichtung zur Unterstützung der Sperrung von Kredit- oder Bank-Karten eines Kartennutzern nach der Lehre von Anspruch 10, und durch einen Bank-Server zur Unterstützung der Sperrung von Kredit- oder Bank-Karten von Kartennutzern nach der Lehre von Anspruch 18.

Neben Kredit- oder Bank-Karten im engeren Sinne ist die Erfindung auch auf sonstige Karten anwendbar, deren Verlust und anschließender unberechtigte Gebrauch für den Kartennutzer nachteilig sein kann. Solche Karten sind beispielsweise Firmenausweise und Schlüsselkarten, Karten von Hotels, Mietwagenfirmen und Kaufhäusern, aufgrund deren besondere Vorteile gewährt werden, Rabattkarten usw. Diese Karten gelten im Sinne der Erfindung als Kredit- oder Bank-Karten. Es ist hierbei vorteilhaft, einen zentralen Blockierungs-Server für all diese Karten vorzusehen.

Der Vorteil der Erfindung besteht darin, daß eine schnelle und benutzerfreundliche Sperrung von Kredit- oder Bank-Karten ermöglicht wird.

Weiter Verhindert die Erfindung, daß Kredit- oder Bank-Karten von Dritten, die nicht Nutzer dieser Kredit- oder Bank-Karten sind gesperrt werden können.

Weiter gewährleistet die Erfindung, daß auf dem zentralen Blockierungs-Server keine Daten abgespeichert sind, mittels denen ein Rückschluß auf die Anzahl und Art der Kredit- oder Bank-Karten eines Kartennutzers möglich ist. Ein weiterer Sicherheitsvorteil ergibt sich dadurch, daß in dem Blockierungs-Server lediglich Informationen vorhanden sind, mittels denen Karten gesperrt werden können. Der Blockierungs-Server kann somit ausschließlich Karten sperrren.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Systems mit einem erfindungsgemäßen Blockierungs-Server und mit mehreren erfindungsgemäßen Vorrichtungen und Bank-Servern.
- Fig. 2: zeigt eine funktionelle Darstellung des Blockierungs-Servers und einer Vorrichtung nach Fig. 1.

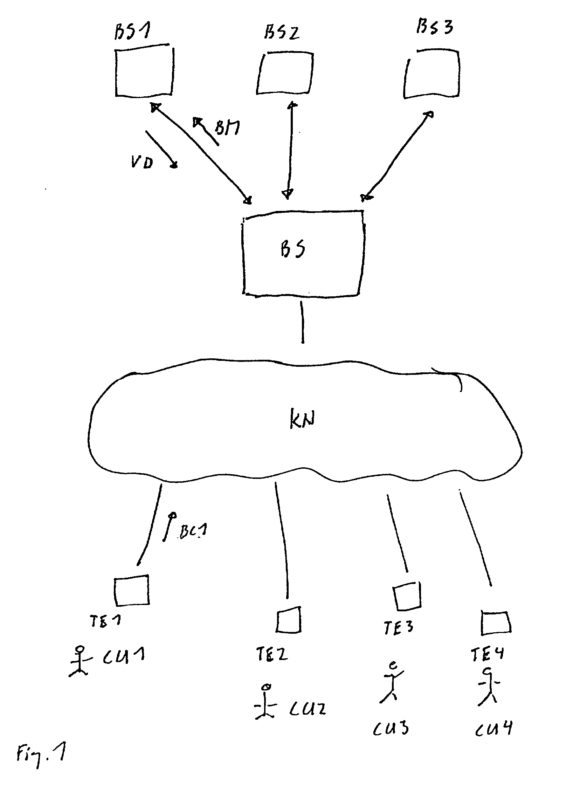

Fig. 1 zeigt mehrere Bank-Server BS1 bis BS3, einen Blockierungs-Server BS, und mehrere Vorrichtungen TE1 bis TE4, die jeweils einem Kartennutzer CU1, CU2, CU3, bzw. CU4 zugeordnet sind.

Die Bank-Server CS1 bis CS3 sind jeweils einer Bank oder einem Kreditinstitut zugeordnet, das Bank- oder Kreditkarten an Kunden vergibt.

Die Bank-Server BS1 bis BS3 werden hierbei jeweils von ein oder von mehreren miteinander verbundenen Rechnern, den Rechnern zugeordneten peripheren Komponenten und der auf diesen Rechnern ablaufenden Software gebildet. Die Bank-Server BS1 bis BS3 sind Bestandteil des Computersystems der jeweiligen zugeordneten Bank oder des jeweiligen zugeordneten Kreditinstituts. Sie sind so in der Lage, die Sperrung von Bank- und Kreditkarten der jeweiligen Bank oder des jeweiligen Kreditinstitutes zu veranlassen.

Die Bank-Server BS1 bis BS3 ermitteln nun jeweils für die von der jeweiligen Bank oder dem jeweiligen Kreditinstitut herausgegeben Bank- oder Kreditkarten einen jeweiligen kartenindividuellen Blockierungscode. Diese Blockierungscodes werden an die jeweiligen Nutzer der Bank- oder Kreditkarten übermittelt und von diesen in ein Speichermedium abgespeichert. Die Übermittlung der Blockierungscodes kann hierbei per Post oder auf elektronischem Wege, beispielsweise mittels email oder SMS (=short message service) durchgeführt werden. Im zweiten Fall ist auch eine automatische Übernahme in das Speichermedium möglich. Bei der elektronischen Übermittlung ist eine verschlüsselte Übertragung der Blockierungscodes vorteilhaft.

Eine weitere Möglichkeit besteht darin, daß die ermittelten Blockierungscodes von den Bank-Servern BS1 bis BS3 zu einem Server eines unabhängigen Dienstbetreibers übermittelt werden. Dieser Dienstbetreiber speichert sämtliche einem Kartennutzer zugeordneten Blockierungscodes auf einem Speichermedium ab. Auf dem Speichermedium sind so die Blockierungscodes für sämtliche Kredit- und Bank-Karten des Kartennutzers abgespeichert. Anschließend wird das Speichermedium an den zugeordneten Kartennutzer versendet.

Neben den Blockierungscodes ermitteln die Bank-Server BS1 bis BS3 auch Daten zur Verifikation des jeweiligen kartenindividuellen Blockierungscodes. Im einfachsten Fall enthalten diese Daten den Blockierungscode und weitere Daten, beispielsweise eine Kundenkennung und eine Kennung der jeweiligen Bank oder des jeweiligen Kreditinstitutes.

Die Bank-Server BS1 bis BS3 senden die ermittelten Daten zur Verifikation von kartenindividuellen Blockierungscodes an den zentralen Blockierungs-Server BS. Hierbei ist es vorteilhaft, daß diese Daten verschlüsselt zu dem Blockierungs-Server BS übermittelt werden.

Die von den Bank-Servern BS1 bis BS3 an den zentralen Blockierungs-Server BS übermittelten Daten zur Verifikation von Blockierungscodes, beispielsweise die Daten VD, werden sodann in dem Blockierungs-Server BS zur Verifikation von Blockierungscodes abgespeichert.

Eine weitere Möglichkeit der Ermittlung von kartenindividuellen Blockierungscodes und Daten zur Verifikation von kartenindividuellen Blockierungscodes besteht in der Verwendung von Einwegfunktionen:

Zwischen den Beteiligten, also beispielsweise zwischen dem Bank-Server BS1 und dem Blockierungs-Server BS, wird eine Einwegfunktion F vereinbart, d. h. die Einwegfunktion F ist sowohl dem Blockierungs-Server BS und dem Bank-Server BS1 bekannt. Die Funktion F ist eine Funktion, die in der "normalen" Richtung effizient zu berechnen ist, jedoch nicht mit vernünftigem Aufwand in der anderen Richtung berechnet werden kann, d. h. nicht invertiert werden kann.

Der Bank-Server BS1 wählt einen zufälligen Wert W und bildet den Wert X = F(W). Sodann sendet er den Wert X zusammen mit einer Kundenkennung und einer Kennung der jeweiligen Bank als Daten zur Verifikation des kartenindividuellen Blockierungscodes an den Blockierungs-Server BS. Der Wert W wird an den jeweiligen Nutzer der Bank- oder Kreditkarten als Blockierungscode übermittelt und in einem Speichermedium abgespeichert. Der Blockierungs-Server BS speichert den Wert X zusammen mit den weiteren Daten und ist so in der Lage, mittels dieser Daten und der Funktion F einen ihm vorliegenden Blockierungscode zu verifizieren. Bei Vorlage des Blockierungscodes BC1 berechnet der Blockierungs-Server BS die Funktion F(BC1) und überprüft, ob F(BC1) tatsächlich den Wert X ergibt.

Hierbei ist es vorteilhaft zu vereinbaren, dass die Nachricht, die die Sperrung auslöst, von dem Blockierungs-Server BS archiviert wird und im Streitfall vorgelegt werden muß.

Diese Art der Erzeugung und Verifikation von Blockierungscodes hat den Vorteil, daß niemand, nicht einmal der Blockierungsserver BS, der ja die Funktion F und den Wert W kennt, in der Lage, den Wert W zu berechnen und damit die Karte zu sperren.

Der Wert W kann auch aus einer Zufallszahl, einer Kundenkennung und einer Kennung der jeweiligen Bank zusammengesetzt sein. Dies hat den Vorteil, daß Informationen über Kundenkennung und Kennung der Bank nur in einer, für den Blockierungs-Server BS nicht entschlüsselbarer Form in dem Blockierungs-Server BS vorliegen.

Es ist weiter möglich, daß Blockierungscode und Daten zur Verifikation von Blockierungscodes mittels eines Signatur-Schlüsselpaars erzeugt werden:

Der Bank-Server BS1 generiert beispielsweise ein Signatur-Schlüsselpaar. Der Blockierungs-Server BS erhält den öffentlichen Schlüssel, der private Schlüssel wird als "interner" Blockierungscode auf dem Speichermedium des Kartennutzers abgespeichert. Mit dem privaten Schlüssel wird eine Blockierungsnachricht, die beispielsweise Datum und Uhrzeit enthält, auf einen Steuerbefehl des Kartennutzer verschlüsselt und so ein kartenindividueller "externer" Blockierungscode berechnet. Dieser "externe" Blockierungscode wird ebenfalls auf dem Speichermedium abgespeichert, aus dem Speichermedium ausgelesen und sodann an den Blockierungs-Server BS gesendet. Dieser Verifiziert den Blockierungscode, indem er die Blockierungsnachricht mittels des öffentlichen Schlüssel entschlüsselt.

Es ist weiter möglich, daß Blockierungscode und Daten zur Verifikation des kartenindividuellen Blockierungscodes ein Schlüsselpaar bilden, aus deren Verknüpfung sich die oben erwähnten weiteren Daten ergeben.

Die Vorrichtungen TE1 bis TE4 sind vorzugsweise Mobilfunk-Endgerät. Es ist jedoch auch möglich, daß es sich bei den Vorrichtungen TE1 bis TE4 um sonstige Telekommunikations-Endgeräte handelt. Weiter ist es auch möglich, daß es sich hierbei beispielsweise um eine wasserdichte Uhr, handelt, die die entsprechenden unten beschriebenen Funktionen erbringt, oder es sich um einen Computer mit einer Schnittstelleneinheit zum Anschluß an ein Kommunikationsnetz handelt.

Die Vorrichtungen TE1 bis TE4 verfügen jeweils über ein Speichermedium auf dem ein oder mehrere kartenindividueller Blockierungscodes abgespeichert sind. Bei diesem Speichermedium handelt es sich beispielsweise um eine SIM Karte. Es ist auch möglich, daß die gesamte Vorrichtung TE1 als Chip-Karte realisiert wird.

Es ist natürlich auch möglich, daß einem Kartennutzer zwei oder mehr Vorrichtungen zugeordnet sind, beispielsweise ein Mobilfunk-Endgerät und ein Computer.

Bei dem Kommunikationsnetz KN handelt es sich um ein Fernsprechnetz, beispielsweise um ein ISDN Netz. Dieses Fernsprechnetz kann mehrere Teilnetze umfassen, bei denen es sich beispielsweise um Mobilfunknetze handelt oder die unterschiedlichen Netzbetreibern zugeordnet sind. Es kann sich bei dem Kommunikationsnetz KN aber auch um ein Datennetz handeln, das beispielsweise eine Kommunikation über den TCP/IP Protokollstack ermöglicht.

Weiter ist es möglich, daß innerhalb des Kommunikationsnetzes Dienste bereitgestellt werden, die Nachrichten mit Blockierungscodes an den Blockierungs-Server BS weiterleiten. Solch ein Dienst kann beispielsweise alle Rufe, die an mehreren unterschiedliche Service-Rufnummern gerichtet sind, an eine einzige, dem Blockierungs-Server zugeordnete Rufnummer weiterleiten. Dieser Dienst kann beispielsweise mittels der IN Technologie (IN = Intelligent Network) realisiert werden und auch integraler Bestandteil des Blockierungs-Servers BS sein.

Der Blockierungs-Server BS veranlaßt die Sperrung der einem ihm übermittelten Blockierungscode zugeordneten Kredit- oder Bank-Karten. Der Blockierungs-Server BS kann hierfür für die Sperrung sämtlicher Kredit- oder Bank-Karten einer Bank oder eines Kreditinstitutes zuständig sein. Vorteilhafter ist jedoch, daß der Blockierungs-Server BS zentral die Sperrung von Kredit- oder Bank-Karten mehrere Kreditinstitute und/ oder Banken veranlassen kann und somit für die Sperrung der Kredit- oder Bank-Karten einer Vielzahl von Banken oder Kreditinstitute zuständig ist. So kann beispielsweise über eine einzige Rufnummer zentral die Sperrung sämtlicher Kredit- oder Bank-Karten eines Kartennutzers initiiert werden.

Der Blockierungs-Server BS wird von einem oder von mehreren miteinander verbundenen Rechnern mit peripheren Komponenten, einer auf diesen Rechnern aufsetzenden Software-Plattform und auf dieser ablaufenden Applikationsprogrammen gebildet. Bei dem Ablauf der Applikationsprogramme auf System-Plattform werden die weiter unten beschriebenen Funktionen des Blockierungs-Servers erbracht.

Der Blockierungs-Server BS kann beispielsweise als IN Server (IN= Intelligent Network, SCP = Service Switching Point) oder als Internet - Server implementiert werden.

Zur Unterstützung der Sperrung von Kredit- oder Bank-Karten des Kartennutzers CU1 wird folgendes Verfahren durchgeführt:

Für jede Kredit- oder Bank-Karte des Kartennutzers CU1 wird ein kartenindividueller Blockierungscode auf einem Speichermedium der Vorrichtung TE1 abgespeichert. Soll eine dieser Kredit- oder Bank-Karten gesperrt werden, so wird der zugeordnete Blockierungscode, hier der Blockierungscode BC1, auf einen Steuerbefehl des Kartennutzers CU1 aus dem Speichermedium ausgelesen und über das Kommunikationsnetz KN an den zentralen Blockierungs-Server BS gesendet. Der Blockierungscode BC1 wird von dem zentralen Blockierungs-Server BS verifiziert. Bei positiver Verifikation wird von dem Blockierungs-Server BS die Sperrung der dem Blockierungscode BC1 zugeordneten Kredit- oder Bank-Karte veranlaßt. Hierzu wird beispielsweise eine Blockierungs-Nachricht BM an den Bank-Server BS1 gesendet.

Im folgenden wird der genaue Aufbau des Blockierungs-Servers BS und der Vorrichtungen TE1 bis TE4 anhand von Fig. 2 erläutert.

Fig. 2 zeigt den Blockierungs-Server BS und beispielhaft für die Vorrichtungen TE1 bis TE4 die Vorrichtung TE1.

Die Vorrichtung TE1 weist ein Speichermedium MEM, eine Steuereinheit CONTR1 und eine Ein-/ Ausgabeeinheit IO auf.

Das Speichermedium MEM wird beispielsweise von einer SIM Karte, einer Chip-Karte, einem Speicherbaustein oder einer Festplatte gebildet. Bei dem Speichermedium MEM kann es sich natürlich auch um ein optisches Speichermedium oder um eine Kombination unterschiedlicher Speichermedien handeln.

Auf dem Speichermedium MEM sind ein oder mehrere kartenindividuelle Blockierungscodes des Kartennutzers CU1 abgespeichert. Ein solcher Blockierungscode besteht beispielsweise aus einem 12 stelligen Zahlencode. Kartenindividuell bedeutet in diesem Zusammenhang, daß jeder der Blockierungscodes der individuelle Blockierungscode einer bestimmten Kredit- oder Bank-Karten ist. Hier sind auf dem Speichermedium MEM n kartenindividuelle Blockierungscodes BC1 bis BCn für n Kredit- oder Bank-Karten des Kartennutzers CU1 abgespeichert. Es ist auch möglich, daß es sich bei den Blockierungscodes BC1 bis BCn- wie bereits oben erwähnt - um interne Blockierungscodes (z.B. Schlüssel) handelt, aus denen externe Blockierungscodes (z.B. mit diesem Schlüssel verschlüsselte Nachrichten) erzeugt werden.

Es ist hierbei vorteilhaft, daß zu jedem Blockierungscode zusätzlich noch eine kurze Beschreibung der Kredit- oder Bank-Karten auf dem Speichermedium MEM abgespeichert ist, der der jeweilige Blockierungscode zugeordnet ist. Bei dieser Beschreibung kann es sich beispielsweise um die Art der Kredit- oder Bank-Karten handeln (Visa, EC ,...) oder um die Kartennummer handeln.

Es ist hierbei vorteilhaft, daß die ein oder mehreren kartenindividuellen Blockierungscodes verschlüsselt in dem Speichermedium MEM abgespeichert sind.

Weiter ist es vorteilhaft, daß auf dem Speichermedium MEM zusätzlich die Kommunikationsadresse des Blockierungs-Servers BS, hier eine Kommunikationsadresse AD, abgespeichert ist.

Die Ein-/ Ausgabeeinheit IO stellt die Benutzerschnittstelle zum Kartennutzer CU1 bereit und dient so der Ein- und der Ausgabe von Daten an den Kartennutzer CU1. Sie besteht beispielsweise aus einem Tastenfeld und einer graphischen Anzeigeeinheit, beispielsweise einer Flüssigkristallanzeige.

Die Steuereinheit CONT1 wird von einer CPU mit Speicher und peripheren Komponenten sowie der auf dieser CPU ablaufenden Software gebildet. Bei dem Ablauf dieser Software auf der CPU werden folgende Funktionen erbracht:

Auf einen Steuerbefehl des Kartennutzers CU1, der über die Ein-/Ausgabeeinheit IO empfangen wird, werden ein oder mehrere der Blockierungscodes aus dem Speichermedium MEM ausgelesen und das Senden des ausgelesenen Blockierungscodes über das Kommunikationsnetz KN an den zentralen Blockierungs-Server BS veranlaßt. Zusätzlich ist es möglich, daß beim Auslesen aus internen Blockierungscodes externe Blockierungscodes erzeugt werden.

Hierbei ist es vorteilhaft, daß es die Steuereinheit CONTR1 dem Kartennutzer CU1 ermöglicht, aus seinen Kredit- und/oder Bankkarten ein oder mehrere durch Steuerbefehle auszuwählen. Die Steuereinheit CONTR1 stellt somit beispielsweise auf einen Steuerbefehl des Kartennutzers CU1 auf einer graphischen Anzeige eine Liste der Kredit- und/oder Bank-Karten dar, deren Blockierungscodes auf dem Speichermedium MEM abgespeichert sind. Der Benutzer kann sodann eine oder mehrere dieser Kredit- und/oder Bankkarten auswählen, beispielsweise durch scrollen und markieren. Die Steuereinheit CONTR1 veranlaßt sodann das Auslesen und das Senden derjenigen Blockierungscodes, die den ausgewählten Kredit- und/oder Bankkarten zugeordnet sind.

Zum Senden der Blockierungscodes an den Blockierungs-Server BS baut die Steuereinheit CONTR1 eine Verbindung über das Kommunikationsnetz KN zu dem Blockierungs-Server BS auf. Dessen Kommunikationsadresse AD entnimmt die Steuereinheit CONTR1 hierbei ebenfalls dem Speichermedium MEM. Sodann übermittelt die Steuereinheit CONTR1 den oder die Blockierungscodes über diese Verbindung, beispielsweise in DTMF Kodierung. Weiter ist es auch möglich, den oder die Blockierungscodes mittels SMS an den Blockierungs-Server BS zu übermitteln. Es ist natürlich auch möglich, daß die Blockierungscodes als Datenpakete über ein Datennetz zu dem Blockierungs-Server BS übermittelt werden.

Es ist hierbei vorteilhaft, daß die Steuereinheit CONTR1 die ausgelesenen Blockierungscodes in verschlüsselter Form an den zentralen Blockierungs-Server BS sendet.

Es ist möglich, daß die Steuereinheit CONTR1 und die Speichereinheit MEM zusammen eine Einheit, beispielsweise in Form einer Chip-Karte bilden.

Der Blockierungs-Server BS weist eine Schnittstelleneinheit INT und eine Steuereinheit CONTR2 auf.

Die Schnittstelleneinheit INT dient dem Anschluß des Blockierungs-Servers BS an das Kommunikationsnetz KN. Es handelt sich hierbei beispielsweise um eine Schnittstellenkarte, die den Anschluß des Blockierungs-Servers BS an das Kommunikationsnetz KN ermöglicht.

Die Steuereinheit CONTR2 wird von auf der Systemplattform des Blockierungsservers ablaufenden Applikationsprogrammen gebildet, die bei ihrem Ablauf auf der Systemplattform aus funktioneller Sicht Funktionen VU und DC erbringen sowie eine Datenbank DB bereitstellen.

Die Datenbank DB dient dem Abspeichern von Daten zur Verifikation von Blockierungscodes.

Die Funktion DC speichert von den Bank-Servern BS1 bis BS3 empfangene Daten zur Verifikation von Blockierungscodes in der Datenbank DB ab.

Die Funktion VU verifiziert mittels Zugriff auf die Datenbank DB Blockierungscodes und veranlaßt das Sperren von Kredit- oder Bank-Karten. Sie kann mehrere Prozesse aufweisen, hier beispielsweise die Prozesse VP1 bis VP4. Wird von der Steuereinheit CONTR2 ein kartenindividueller Blockierungscode über Schnittestelleneinheit INT empfangen, so wird durch die Funktion VU ein Prozess gestartet, beispielsweise der Prozess VP1, der eine Verifikation des kartenindividuellen Blockierungscodes durchführt. Bei positiver Verifikation veranlaßt der Prozess VP1 die Sperrung der dem kartenindividuellen Blockierungscode zugeordneten Kredit- oder Bank-Karte. Dies geschieht dadurch, daß der Prozess das Senden einer Blockierungsnachricht BN an den entsprechenden Bank-Server, beispielsweise an den Bank-Server BS1, veranlaßt. Danach wird der Prozess VP1 beendet.

Zur Verifikation von Blockierungscodes greift der Prozess VP1 hierbei auf die in der Datenbank DB abgespeicherten Daten zur Verifikation von Blockierungscodes zu. Er korreliert hierbei beispielsweise ein Blockierungscode mit allen in der Datenbank DB abgespeicherten Daten zur Verifikation von Blockierungscodes. Wird hierbei ermittelt, daß ein Blockierungscode ein gültiger Blockierungscode einer Kredit- oder Bank-Karte ist, so ist das Ergebnis die Verifikation positiv.

Es ist vorteilhaft, daß der Prozess VP1 bei der Verifikation das Kreditinstitut oder die Bank ermittelt, die die Kredit- oder Bank-Karte ausgegeben hat, der der kartenindividuellen Blockierungscode zugeordnet ist.

Weiter ist es vorteilhaft, daß der Prozess VP1 bei der Verifikation eine Kundenkennung des Kartennutzers der Kredit- oder Bank-Karte ermittelt, der der kartenindividuellen Blockierungscode zugeordnet ist.

Der Prozess VP1 veranlaßt sodann die Sperrung der Kredit- oder Bank-Karte, indem er das Senden einer Blockierungsnachricht mit der ermittelte Kundenkennung an das ermittelte Kreditinstitut oder die ermittelte Bank veranlaßt.

## Patentansprüche

1. Verfahren zur Unterstützung der Sperrung von Kredit- oder Bank-Karten eines Kartennutzers (CU1 bis CU4),
**dadurch gekennzeichnet, daß** ein kartenindividueller Blockierungscode (BC1 bis BCn) auf einem Speichermedium (MEM) abgespeichert wird, daß der Blockierungscode (BC1) auf einen Steuerbefehl des Kartennutzers aus dem Speichermedium (MEM) ausgelesen und ein kartenindividueller Blockierungscode (BC1) über ein Kommunikationsnetz (KN) an einen zentralen Blockierungs-Server (BS) gesendet wird, daß der empfangene Blockierungscode (BC1) von dem zentralen Blockierungs-Server (BS) verifiziert wird, und daß bei positiver Verifikation von dem Blockierungs-Server (BS) die Sperrung der dem Blockierungscode (BC1) zugeordneten Kredit- oder Bank-Karte veranlaßt wird.

2. Verfahren nach Anspruch 1, **dadurch gekennzeichnet, daß** der Blockierungs-Server (BS) zentral die Sperrung von Kredit- oder Bank-Karten mehrere Kreditinstitute und/ oder Banken veranlaßt.

3. Verfahren nach Anspruch 1, **dadurch gekennzeichnet, daß** von Bank-Servern (BS1 bis BS3) Daten (VD) zur Verifikation von Blockierungscodes an den zentralen Blockierungs-Server (BS) übermittelt und in dem Blockierungs-Server (BS) abgespeichert werden.

4. Verfahren nach Anspruch 1, **dadurch gekennzeichnet, dass** der kartenindividuellen Blockierungscode (BC1) und die Daten (VD) zur Verifikation von Blockierungscodes mittels eines Signatur-Schlüsselpaars erzeugt werden, wobei der kartenindividuellen Blockierungscode (BC1) von dem privaten Schlüssel des Signatur-Schlüsselpaars abgeleitet wird und die Daten (VD) zur Verifikation von Blockierungscodes von dem öffentlichen Schlüssel des Signatur-Schlüsselpaars abgeleitet wird.

5. Blockierungsserver (BS) zur Unterstützung der Sperrung von Kredit- oder Bank-Karten einer Vielzahl von Kartennutzern (CU1 bis CU4), wobei der Blockierungs-Server (BS) mit einer Schnittstelleneinheit (INT) zum Anschluß des Blockierungsservers (BS) an ein Kommunikationsnetz (KN) versehen ist, **dadurch gekennzeichnet, daß** der Blockierungs-Server (BS) mit einer Steuereinheit (CONTR2) versehen ist, die so ausgestaltet ist, daß sie, wenn sie einen kartenindividuellen Blockierungscode über die Schnittestelleneinheit (INT) empfängt, eine Verifikation des kartenindividuellen Blockierungscodes durchführt, und daß sie bei positiver Verifikation die Sperrung der dem kartenindividuellen Blockierungscode zugeordneten Kredit- oder Bank-Karte veranlaßt.

6. Blockierungs-Server (BS) nach Anspruch 5, **dadurch gekennzeichnet, dass** die Steuereinheit (CONTR2) mit einer Datenbank (DB) zum Abspeichern von Daten zur Verifikation von Blockierungscodes versehen ist, und daß die Steuereinheit (CONTR2) weiter so ausgestaltet ist, daß sie von Bank-Servern (BS1 bis BS3) empfangene Daten zur Verifikation von Blockierungscodes in der Datenbank (DB) abspeichert und zur Verifikation von Blockierungscodes auf die in der Datenbank (DB) abgespeicherten Daten zur Verifikation von Blockierungscodes zugreift.

7. Blockierungs-Server (BS) nach Anspruch 5, **dadurch gekennzeichnet, daß** die Steuereinheit (CONT2) weiter so ausgestaltet ist, daß sie bei der Verifikation das Kreditinstitut oder die Bank ermittelt, die die Kredit- oder Bank-Karte ausgegeben hat, der der kartenindividuelle Blockierungscode zugeordnet ist.

8. Blockierungs-Server (BS) nach Anspruch 5, **dadurch gekennzeichnet, daß** die Steuereinheit (CONT2) weiter so ausgestaltet ist, daß sie bei der Verifikation eine Kundenkennung des Kartennutzers der Kredit- oder Bank-Karte ermittelt, der der kartenindividuelle Blockierungscode zugeordnet ist.

9. Blockierungs-Server (BS) nach Anspruch 7 und Anspruch 8, **dadurch gekennzeichnet, daß** die Steuereinheit (CONT2) weiter so ausgestaltet ist, daß sie bei der Sperrung der Kredit- oder Bank-Karte das Senden der ermittelte Kundenkennung an das ermittelte Kreditinstitut oder die ermittelte Bank veranlaßt.

10. Vorrichtung (TE1 bis TE4) zur Unterstützung der Sperrung von Kreditoder Bank-Karten eines Kartennutzers (CU1 bis CU4),
**dadurch gekennzeichnet**, daßdieVorrichtung(TE1) mit einem Speichermedium (MEM) versehen ist, auf dem ein oder mehrere kartenindividuelle Blockierungscodes (BC1 bis BCn) des Kartennutzers abgespeichert sind, und daß die Vorrichtung (TE1) mit einer Steuereinheit (CONT1) versehen ist, die so ausgestaltet ist, daß sie auf einen Steuerbefehl des Kartennutzers (CU1) einen oder mehrere der Blockierungscodes aus dem Speichermedium (MEM) ausliest und das Senden von kartenindividuellen Blockierungscodes über ein Kommunikationsnetz (KN) an einen zentralen Blockierungs-Server (BS) veranlaßt.

11. Vorrichtung (TE1) nach Anspruch 10, **dadurch gekennzeichnet, daß** die Vorrichtung ein Mobilfunk-Endgerät ist.

12. Vorrichtung nach Anspruch 10, **dadurch gekennzeichnet, daß** die Vorrichtung ein Computer mit einer Schnittstelleneinheit zum Anschluß an ein Kommunikationsnetz ist.

13. Vorrichtung (TE1) nach Anspruch 10, **dadurch gekennzeichnet, daß** das Speichermedium eine SIM Karte ist.

14. Vorrichtung (TE1) nach Anspruch 10, **dadurch gekennzeichnet, daß** die Steuereinheit (CONT1) weiter so ausgestaltet ist, daß sie es dem Kartennutzer (CU1) ermöglicht, aus seinen Kredit- und/oder Bankkarten ein oder mehrere durch Steuerbefehle auszuwählen und daß sie das Auslesen und das Senden der Blockierungscodes veranlaßt, die den ausgewählten Kredit- und/oder Bankkarten zugeordnet sind.

15. Vorrichtung (TE1) nach Anspruch 10, **dadurch gekennzeichnet, daß** die ein oder mehreren kartenindividuellen Blockierungscodes (BC1 bis BCn) verschlüsselt in dem Speichermedium (MEM) abgespeichert sind.

16. Vorrichtung nach Anspruch 10, **dadurch gekennzeichnet, daß** die Steuereinheit (CONT1) weiter so ausgestaltet ist, daß sie die ausgelesenen Blockierungscodes in verschlüsselter Form an den zentralen Blockierungs-Server (BS) sendet.

17. Vorrichtung nach Anspruch 10, **dadurch gekennzeichnet, daß** die Steuereinheit weiter so ausgestaltet ist, daß sie einen kartenindividuellen internen Blockierungscode aus dem Speichermedium ausliest, daß sie aus dem kartenindividuellen internen Blockierungscode einen kartenindividuellen externen Blockierungscode erzeugt und das Senden dieses externen Blockierungscodes über das Kommunikationsnetz an den zentralen Blockierungs-Server veranlaßt.

18. Bank-Server (CS1 bis CS3) zur Unterstützung der Sperrung von Kreditoder Bank-Karten von Kartennutzern (CU1 bis CU4),
**dadurch gekennzeichnet**, daßderBank-Server(CS1 bis CS3) so ausgestaltet ist, daß er zu einer Kredit- oder Bank-Karte einen kartenindividuellen Blockierungscode und Daten zur Verifikation des kartenindividuellen Blockierungscodes ermittelt, und der Bank-Server (CS1 bis CS3) weiter so ausgestaltet ist, daß er das Senden der Daten zur Verifikation des kartenindividuellen Blockierungscodes an einen zentralen Blockierungs-Server veranlaßt.
